(19) Europäisches Patentamt
European Patent Office
Office européen des brevets

(11) EP 0 323 744 B1

(12) EUROPEAN PATENT SPECIFICATION

(45) Date of publication and mention of the grant of the patent: **19.03.1997 Bulletin 1997/12**

(51) Int Cl.6: **C09B 1/20**, B41M 5/38, C09D 11/00

(21) Application number: **88312272.3**

(22) Date of filing: **23.12.1988**

# (54) Transfer sheet ink and method for sublimation thermal-transfer printing

Übertragungsschicht,Tiste und Verfahren zum Bedrucken durch thermischen Sublimationstransferdruck

Feuille pour transfert,encre et procédé pour impression par sublimation et transfert par la chaleur

(84) Designated Contracting States:
**DE FR GB**

(30) Priority: **29.12.1987 JP 333167/87**
**29.12.1987 JP 333168/87**
**13.01.1988 JP 3686/88**

(43) Date of publication of application:
**12.07.1989 Bulletin 1989/28**

(60) Divisional application: **96111402.2**

(73) Proprietor: **MITSUI TOATSU CHEMICALS, Inc.**
**Chiyoda-Ku Tokyo 100 (JP)**

(72) Inventors:
- **Takuma, Keisuke**
  **Ohmuta-shi Fukuoka-ken (JP)**
- **Ohyama, Tsukasa**
  **Ohmuta-shi Fukuoka-ken (JP)**
- **Mikoda, Tamio**
  **Ohmuta-shi Fukuoka-ken (JP)**
- **Ghoda, Isamu**
  **Kobe-shi Hyogo-ken (JP)**
- **Koshida, Hitoshi**
  **Nishinomiya-shi Hyogo-ken (JP)**
- **Igata, Akitoshi**
  **Ohmuta-shi Fukuoka-ken (JP)**

(74) Representative: **Stuart, Ian Alexander et al**
**MEWBURN ELLIS**
**York House**
**23 Kingsway**
**London WC2B 6HP (GB)**

(56) References cited:

| | |
|---|---|
| **EP-A- 0 209 990** | **DE-A- 1 940 184** |
| **DE-A- 2 009 468** | **DE-A- 3 524 833** |
| **FR-A- 1 262 253** | **FR-A- 1 264 242** |
| **FR-A- 2 451 393** | **JP-A-61 227 093** |
| **US-A- 2 773 071** | |

- **CHEMICAL ABSTRACTS, vol. 104, no. 12, 24th March 1986, page 733, abstrct no. 99582s, Columbus, Ohio, US; & JP-A-60 131 293 (MITSUBISHI CHEMICAL INDUSTRIES CO., LTD) 12-07-1985**

Remarks:
The file contains technical information submitted after the application was filed and not included in this specification

EP 0 323 744 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to magenta anthraquinone dyestuffs for use in sublimation thermaltransfer.

Preferred magenta anthraquinones have good adhesion and color development properties as well as excellent fastness which can be used in a method for producing images using a thermal head for heating and sublimation transfer thereof.

The anthraquinones may be such as to enable one to obtain color hard copies through a CRT color display, a color facsimile, a magnetic camera and the like utilizing a transfer type heat-sensitive recording system as the means for recording information.

Japanese Patent Laid-open Publication No. 78896/1984 discloses the use of compounds represented by the following general formula (A) as a magenta dyestuff for sublimation thermal transfer:

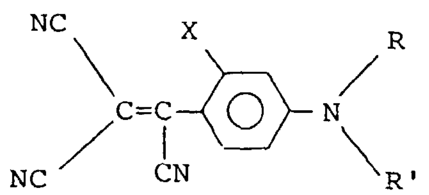

(A)

wherein X is a hydrogen atom or methyl group, and R and R' are each a methyl group, ethyl group or straight-chain or branched propyl or butyl group.

However, dyestuffs having the general formula (A) have poor light fade resistance and thus the preservation of information records employing such dyestuffs is defective.

In Japanese Patent Laid-open Publication No. 131293/1985, as magenta dyestuffs for sublimation thermal transfer there are disclosed anthraquinones which are represented by the following general formula (B):

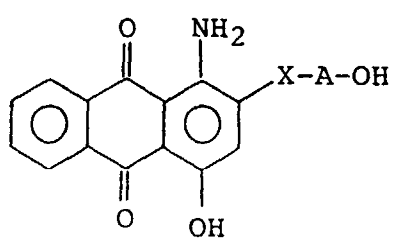

(B)

wherein X is an oxygen atom or sulfur atom, and A is a straight-chain or branched alkylene group, alkylene-O-alkylene group, alkylene-S-alkylene group, cyclohexylene group, phenylene group,

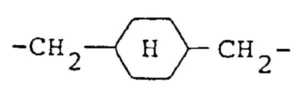

or

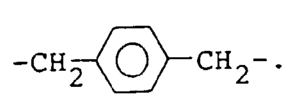

However, undesirably a great deal of energy is required to transfer these dyestuffs and the cost of a machine which uses them is thus uneconomically high.

Moreover, known 1-amino-2-phenoxy-4-hydroxy-anthraquinone (CI. No. Disp Red 60), 1-amino-2-phenylthio-4-hydroxyanthraquinone (Japanese Patent Laid-open Publication No. 159091/1985) and 1,4-diamino-2,3 bisphenoxyanthraquinone (Japanese Patent Laid-open Publication No. 268495/1986) are also used, but they are poor in solubility in solvents employed in an ink-based process, they have poor sublimation properties and are unsatisfactory with respect to dyestuff adhesion and fastness properties.

Moreover, these anthraquinone dyestuffs have a yellowish color and therefore magenta dyestuffs in which absorption occurs in a longer wavelength range are in strong demand.

In one aspect the present invention provides an ink for thermal recording comprising a sublimable dyestuff, a binder resin, and a solvent, and wherein the dyestuff is a magenta anthraquinone which is suitable for sublimation thermal transfer and is of one of the formulae:

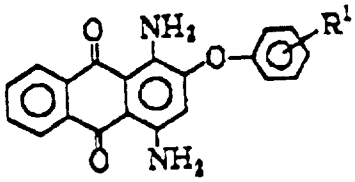

(I)

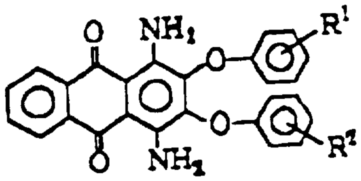

(II)

wherein $R^1$ is a hydrogen atom, a halogen atom, hydroxyl, alkyl having 1 to 4 carbon atoms or alkoxy having 1 to 4 carbon atoms and $R^2$ is a hydrogen atom, a halogen atom, alkyl having 1 to 4 carbon atoms or alkoxy having 1 to 4 carbon atoms, with the proviso that in formula (II) either $R^1$ or $R^2$ is not a hydrogen atom.

In a second aspect the invention provides a transfer sheet for sublimation thermal transfer employing a magenta anthraquinone of the formula (I) or (II) as defined above.

In a third aspect the invention provides a method of thermal transfer comprising applying an ink according to the first aspect to a substrate to form a transfer sheet, and then applying this sheet onto the face of the printable substrate onto which an image is to be recorded, and heating and pressing the resulting laminate from the back surface of the transfer sheet by means of a heat-transfer recording head.

Some preferred embodiments will now be described in greater detail.

preferred dyestuffs for use in this invention can easily be dissolved in a solvent, are excellent with respect to convertibility into ink, sublimation and fastness and are free from migration into and contamination of the base material to which they are transferred by sublimation. The anthraquinones represented by the formula (I), are described hereinbelow in accordance with preferred embodiments.

The alkyl groups of 1 to 4 carbon atoms, which can be straight-chain or branched, include methyl, ethyl, n-propyl, isopropyl, n-butyl and isobutyl. The alkoxy groups of 1 to 4 carbon atoms can be straight-chain, branched, secondary or tertiary and include methoxy, ethoxy, n-propoxy, isopropoxy, n-butoxy, sec-butoxy and tert-butoxy.

Halogen atoms include fluorine, chlorine, bromine and iodine.

$R^1$ and $R^2$ can be at the o-, m- or p-position.

In preferred 1,4-diamino-2-phenoxyanthraquinones, $R^1$ is at the m-position of the phenoxy group, which anthraquinones can be represented by the general formula (III):

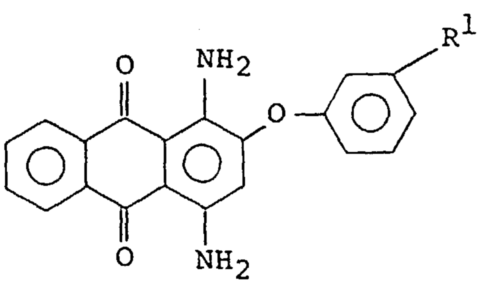

(III)

wherein $R^1$ has the values given above.

The 1,4-diamino-2-phenoxyanthraquinones represented by the general formula (III) have a magenta color and in sublimation thermal transfer processes using these compounds, the amount thereof to be transferred can be regulated by altering the energy which is fed to the heat-transfer head, so that gradation recordings can easily be produced. Therefore, these magenta anthraquinones are suitable for full color records. In particular, those in which the m-position

of the phenoxy group bears a substituent exhibit superior performance characteristics compared to conventional ones.

Preferred examples of $R^1$ in the compounds represented by formula (III) include alkyl groups such as methyl, ethyl, n-propyl, isopropyl and n-butyl; alkoxy groups such as methoxy, ethoxy, n-propoxy and n-butoxy; hydroxyl; and halogen atoms such as fluorine, chlorine and bromine.

The 1,4-diamino-2,3-bisphenoxyanthraquinones of formula (II) are useful in that, when thermally transferred, the amount of the compound to be transferred can be regulated by altering the energy which is fed to the heat-transfer head, so that halftone printings can easily be produced. Therefore, these compounds are suitable for full color records.

The compounds of formula (II) have particularly good solubility in organic solvents and dispersibility in water. In particular, those in which $R^1$ and $R^2$ lie at m-positions are better from the view point of solubility in solvents employed for ink formation. Therefore highly concentrated inks in which the dyestuff is uniformly dissolved or dispersed can easily be produced. Consequently, images having good color density can be recorded.

In the compounds of formula (II), the two phenoxy groups can be identical or different but, as noted above, both $R^1$ and $R^2$ are not hydrogen atoms simultaneously.

The anthraquinones represented by the general formulas (I) and II of the present invention generally have the following common characteristics:

They are stable to heat, light, moisture and chemicals and thus are not thermally decomposed during transfer recording and the recorded images produced therefrom have excellent stability.

The compounds have good solubility in organic solvents and good dispersibility in water and highly concentrated inks in which the dyestuff is uniformly dissolved or dispersed can easily be produced. Consequently, images having good color density can be recorded. Thus, these compounds are commercially valuable.

The anthraquinones represented by the general formulas (I) and II can be synthesized by reacting a compound represented by the general formula (IV):

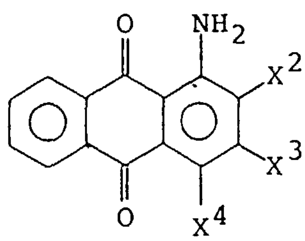

(IV)

wherein $X^2$ is a chlorine atom or $NaSO_3$, $X^3$ is a hydrogen atom or chlorine atom, and $X^4$ is $NH_2$ with a compound represented by the general formula (V):

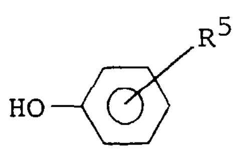

(V)

wherein $R^5$ is a hydrogen atom, an alkyl group of 1 to 4 carbon atoms, an alkoxy group of 1 to 4 carbon atoms, a hydroxyl group or a halogen atom,
in an aprotic polar solvent.

The 1,4-diamino-2-phenoxyanthraquinones represented by the general formula (III) can be synthesized by reacting a compound of the formula (IV) in which $X^2$ is a chlorine atom or $NaSO_3$, $X^4$ is $NH_2$ and $X^3$ is a hydrogen atom, i.e., 1,4-diamino-2-chloroanthraquinone or 1,4-diaminoanthraquinone-2-sodium sulfonate, with a substituted phenol represented by the formula

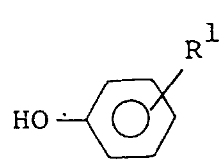

wherein $R^1$ is the same as in the general formula (III), in a polar organic solvent such as sulfolane and in the

presence of a base.

The 1,4-diamino-2,3-bisphenoxyanthraquinone dyestuffs can be synthesized as follows:

When $R^1$ and $R^2$ in formula (II) are different from each other, there are used compounds represented by the general formulae (VI) and (VII):

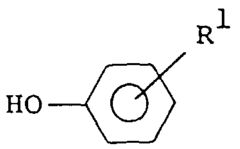 (VI) 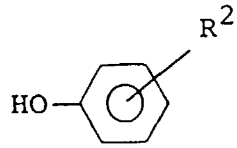 (VII)

wherein $R^1$ and $R^2$ have the same values as in the general formula (II) and are different from each other.

First, the compound represented by the formula (IV) in which each of $X^2$ and $X^3$ is a chlorine atom, and $X^4$ is $NH_2$, i-e-,1,4-diamino-2,3-dichloroanthraquinone, is reacted with a molar equivalent amount of a compound of formula (VI), in an aprotic polar solvent, e.g., at a temperature of 140 to 160°C, to produce a compound represented by the general formula (VIII):

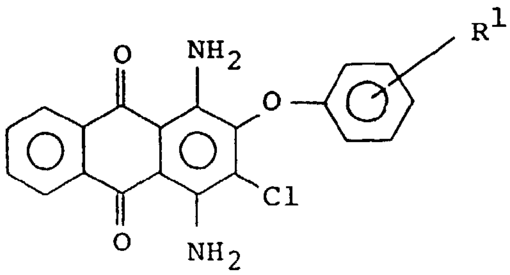 (VIII)

wherein $R^1$ is the same as in the general formula (II), The thus produced compound is then isolated and thermally reacted with a compound of formula (VII) in an aprotic polar solvent, e.g., at a temperature of 160 to 180°C, to obtain the desired anthraquinone represented by the general formula (II).

When $R^1$ and $R^2$ in formula (II) are identical, the compound represented by formula (IV) in which each of $X^2$ and $X^3$ is a chlorine atom, and $X^4$ is $NH_2$ i.e., 1,4-diamino-2,3-dichloroanthraquinone is reacted with a compound of formula (V) in an aprotic polar solvent, e.g., at a temperature of 160 to 180°C, to produce the desired 1,4-diamino-2,3-bisphenoxyanthraquinone.

Procedures for heat transfer printing of synthetic materials are disclosed in French Patent Nos. 1213330 and 1585119 and in German Patent No. 1769757, and dyestuffs, regulators and auxiliary carriers used in such procedures are disclosed in German Laid-open Patent Application Nos. 1771813 and 1771812, to which the reader is referred.

An ink for thermal transfer record from an anthraquinone of general formula (I) or (II) can be prepared by mixing the dyestuff with a suitable resin, solvent and the like. Furthermore, the thermal transfer may be accomplished by first applying the thus obtained ink onto a suitable transfer substrate to form a transfer sheet and then applying this sheet onto the face of the printable substrate onto which an image is to be recorded, and heating and pressing the resulting laminate from the back surface of the transfer sheet by means of a heat-transfer recording head.

The resin used for the preparation of the ink can be one which is used for the manufacture of conventional printing inks, examples of which include oil resins such as rosin, phenolic resin, xylene resin, petroleum resin, vinyl resin, polyamide, alkyd resin, nitrocellulose and alkylcellulose; and aqueous resins such as maleic resin, acrylic resin, casein resin, shellac and glue.

Examples of the solvent which can be used for the preparation of the ink include alcohols such as methanol, ethanol, propanol and butanol; cellosolves such as methyl cellosolve and ethyl cellosolve; aromatics such as benzene, toluene and xylene; esters such as ethyl acetate and butyl acetate; ketones such as acetone, methyl ethyl ketone and cyclohexanone; hydrocarbons such as ligroin, cyclohexane and kerosene; and dimethylformamide. If an aqueous resin is selected, water or a mixture of water and one of the above-mentioned water-miscible solvents can be used.

Suitable examples of transfer substrates onto which the ink is applied include thin papers such as condenser paper and glassine paper; and films of plastics having good heat resistance, such as polyester, polyamide and polyimide. The thickness of the transfer substrate preferably is in the range of 5 to 50 μm so as to increase the heat transfer efficiency from the heat-transfer recording head to the dyestuff.

Examples of the printable materials onto which images can be recorded include fibers, fabrics, films, sheets and

molded articles made from polyolefine resins, such as polyethylene and polypropylene; halogenated polymers such as polyvinyl chloride and polyvinylidene chloride; vinyl polymers such as polyvinyl alcohol, polyvinyl acetate and polyacrylic esters; polyester resins, such as polyethylene terephthalate and polybutylene terephthalate; polystyrene resins; polyamide resins; copolymer resins of olefins, such as ethylene and propylene and other vinyl monomers; ionomers; cellulosic resins, such as cellulose diacetate and cellulose triacetate; polycarbonates; polysulfones; polyamides and the like.

Particularly preferred as substrates are fabrics, sheets and films made from polyethylene terephthalate.

Additionally, there can be employed the usual papers employed in thermal printing, e.g., cellulosic papers coated or impregnated with the above-mentioned resins containing acidic fine particles such as silica gel, laminates of resin films, and specially processed papers which have been subjected to an acetylation treatment. When these special papers are used as the printable substrate, good images can be recorded thereon which are excellent in image stability at a high temperature and a high humidity. Moreover, synthetic papers made from various resins can be also used.

After transfer recording the printed surface can be covered with a clear coating. For example, a polyester film can be laminated onto the surface bearing the transferred and recorded image by heat pressing, whereby the color development of the dyestuff and the storage stability of recorded image can be improved.

The performance of the dyestuffs represented by the general formula (I) or (II) will be described in detail in accordance with examples which follow, in which examples, "part" and "parts" are based on weight.

Example 1

(i) Preparation of Ink

| | |
|---|---|
| 1,4-Diamino-2(3-methylphenoxy) anthraquinone | 3 parts |
| Polybutyral resin | 4.5 parts |
| Methyl ethyl ketone | 46.25 parts |
| Toluene | 14.0 parts |

To prepare an ink, the mixture of the above-mentioned composition was blended by mixing with glass beads for about 30 minutes by means of a paint conditioner.

(ii) Preparation of Transfer Sheet

The thus prepared ink was applied in a conventional manner onto a 9 µm polyethylene terephthalate film, the back surface of which had been subjected to a heat resistance treatment by the use of a gravure calibrater (plate depth = 30 µm). The ink was applied at such a rate that the dry weight was about 1.0 g/m$^2$. Afterwards, the applied ink was dried by heating the film.

(iii) Preparation of Material to be Recorded

| | |
|---|---|
| Polyester Resin (Vylon 103; Toyobo Co., Ltd.; Tg = 47°C) | 0.8 part |
| EVA Polymeric Plasticizer (Erbaloy 741p; Mitsui Polychemical Co., Ltd.; Tg = -37°C) | 0.2 part |
| Amino-modified Silicone (KF-857; The Shin-Etsu Chemical Co., Ltd.) | 0.04 part |
| Epoxy-modified Silicone (KF-103; The Shin-Etsu Chemical Co., Ltd.) | 0.04 part |
| Methyl Ethyl Ketone/Toluene/Cyclohexane (weight ratio = 4 : 4 : 2) | 9.0 parts |

These components were mixed conventionally in order to prepare a coating solution, which was then applied onto a face of a synthetic paper such as polyethylene or polyester using a bar coater (RK Print Coat Instruments Co., Ltd.; No. 1) at a dry weight rate of about 4.5 g/m$^2$, followed by drying at 100°C for 15 minutes.

(iv) Transfer Recording

The ink-bearing face of the transfer sheet was placed against the coated face of the thus-produced synthetic paper so that the inked surface of the former was in intimate contact with the coated surface of the latter and recording was then achieved by heating and pressing the resulting laminate from the back surface of the transfer sheet by a heat-transfer recording head under conditions of a voltage = 10 V and a printing time of 4.0 milliseconds, whereby an image having a magenta color and a color density of 1.9 was recorded.

The color density was measured by the use of a densitometer, model RD-514 (filter = Latten No. 58) made by U. S. Macbeth Co., Ltd. and was calculated in accordance with the following formula:

$$\text{Color Density} = \log_{10}(Io/I)$$

Io = Intensity of reflected light from a standard white reflective plate
I = Intensity of reflected light from a specimen.

For the recorded image, a light resistance test was carried out by the use of a xenon fade meter (Suga Testing Machine Co., Ltd.) at a black panel temperature of 63 ± 2°C and 90% relative humidity. This test confirmed that the recorded image was scarcely discolored by the irradiation for 40 hours and was excellent in stability at high temperatures and high humidity.

The color fastness of the recorded image was evaluated by allowing the specimen to stand at 50°C for 48 hours, and then observing the vividness of the image and the colored state of the white paper after the surface of the specimen had been rubbed against a white paper. According to this test, the vividness of the image was unchanged and the white paper against which the image surface had been rubbed was not colored, which indicated that the fastness of the recorded image was good.

In the following examples and comparative examples, the preparation of inks, transfer sheets and materials to be recorded as well as the transfer recording were carried out in accordance with the same procedure as in Example 1. The resulting of color densities are set forth in Table 1.

Example 2

1,4-Diamino-2(3-methoxyphenoxy)anthraquinone was used as the dyestuff and a magenta color image having a color density of 1.9 was recorded.

In the color fastness test, the vividness of the recorded image was unchanged and a white paper against which the surface of the image had been rubbed was not colored. In addition, color fastness was good.

Example 3

1,4-Diamino-2(3-chlorophenoxy)anthraquinone was used as the dyestuff and a magenta color image having a color density of 2.0 was recorded.

In the color fastness test, the vividness of the recorded image was unchanged and a white paper against which the surface of the image had been rubbed was not colored. In addition, color fastness was good.

Example 4

1,4-Diamino-2(3-hydroxyphenoxy)anthraquinone was used as the dyestuff and a magenta color image having a color density of 1.9 was recorded.

In the color fastness test,the vividness of the recorded image was unchanged and a white paper against which the surface of the image had been rubbed was not colored. In addition, color fastness was good.

Examples 6 to 11

In these examples the respective dyestuffs shown in Table 1 were used and vivid magenta color images having color densities shown in Table 1 were transferred and recorded.

Furthermore, the light resistance and fastness of the recorded images were good, as in Example 1.

Example 5

1,4-Diamino-2,3-bis(3-methylphenoxy)-anthraquinone was used as the dyestuff and a magenta color image having

a color density of 1.8 was recorded.

The stability of the image at a high temperature and a high humidity was excellent. In the color fastness test, the vividness of the recorded image was unchanged and a white paper against which the surface of the image had been rubbed was not colored. In addition, fastness was good.

Comparative Example 1

1,4-Diamino-2(2-hydroxyphenoxy)anthraquinone was used as the dyestuff and a magenta color image having a color density of only 0.61 was recorded. In the color fastness test, the vividness of the recorded image was poor and a white paper against which the surface of the image had been rubbed was colored.

Comparative Example 2

1,4-Diamino-2(4-hydroxyphenoxy)anthraquinone was used as the dyestuff and a magenta color image having a color density of only 0.54 was recorded. Moreover, in the color fastness test, the vividness of the recorded image was poor and a white paper against which the surface of the image had been rubbed was colored.

Comparative Example 3

1-Amino-2-phenoxy-4-hydroxyanthraquinone was used as the dyestuff to prepare an ink. However, the dyestuff did not dissolve acceptably in the solvent and a part of the dyestuff remained undissolved in the form of coarse crystals.

Material to be recorded, application of the ink to a transfer sheet and drying were then carried out as described above. The transfer sheet produced therefrom was not uniform and coarse grains were deposited thereon.

Transfer recording was performed using the transfer sheet. A non-uniform image was transferred and recorded and overall the quality of the image was poor.

Comparative Examples 4 and 5

1-Amino-2(2-methylphenoxy)-4-hydroxyanthraquinone and 1-amino-2(4-methoxyphenoxy)-4-hydroxyanthraquinone were used as dyestuffs to prepare thermal inks. Materials to be recorded were then prepared, followed by applying the ink to the transfer sheet, drying and transfer recording, all as in Comparative Example 3. The results obtained with the respective dyestuffs were similar to those of Comparative Example 3 and the overall quality of the images was poor.

Table 1

| | Dyestuff | Color Density |
|---|---|---|
| Example 1 | 1,4-Diamino-2(3-methylphenoxy)anthraquinone | 1.9 |
| Example 2 | 1,4-Diamino-2(3-methoxyphenoxy)anthraquinone | 1.9 |
| Example 3 | 1,4-Diamino-2(3-chlorophenoxy)anthraquinone | 2.0 |
| Example 4 | 1,4-Diamino-2(3-hydroxyphenoxy)anthraquinone | 1.9 |
| Example 5 | 1,4-Diamino-2,3bis(3-methylphenoxy)anthraquinone | 1.8 |
| Example 6 | 1,4-Diamino-2,3bis(2-methylphenoxy)anthraquinone | 1.7 |
| Example 7 | 1,4-Diamino-2,3bis(3-methoxyphenoxy)anthraquinone | 1.6 |
| Example 8 | 1,4-Diamino-2,3bis(4-tert-butylphenoxy)anthraquinone | 1.4 |
| Example 9 | 1,4-Diamino-2-phenoxy-3(3-methylphenoxy)anthraquinone | 1.5 |
| Example 10 | 1,4-Diamino-2,3bis(3-chlorophenoxy)anthraquinone | 1.4 |
| Example 11 | 1,4-Diamino-2,3bis(4-methylphenoxy)anthraquinone | 1.7 |

Table 1 (Cont'd.)

| | Dyestuff | Color Density |
|---|---|---|
| Comp. Ex. 1 | 1,4-Diamino-2(2-hydroxyphenoxy)anthraquinone | 0.61 |
| Comp. Ex. 2 | 1,4-Diamino-2(4-hydroxyphenoxy)anthraquinone | 0.54 |
| Comp. Ex. 3 | 1-Amino-2-phenoxy-4-hydroxyanthraquinone | 1.2 |
| Comp. Ex. 4 | 1-Amino-2(2-methylphenoxy)-4-hydroxyanthraquinone | 1.0 |
| Comp. Ex. 5 | 1-Amino-2(4-methoxyphenoxy)-4-hydroxyanthraquinone | 0.8 |

**Claims**

**1.** An ink for thermal transfer recording comprising a sublimable dyestuff, a binder resin, and a solvent, and wherein

the dyestuff is a magenta anthraquinone which is suitable for sublimation thermal transfer and is of one of the formulae:

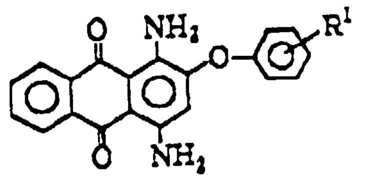

(I)

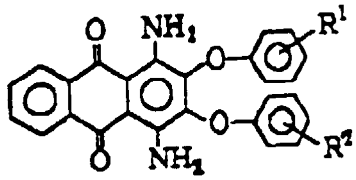

(II)

wherein $R^1$ is a hydrogen atom, a halogen atom, hydroxyl, alkyl having 1 to 4 carbon atoms or alkoxy having 1 to 4 carbon atoms and $R^2$ is a hydrogen atom, a halogen atom, alkyl having 1 to 4 carbon atoms or alkoxy having 1 to 4 carbon atoms, with the proviso that in formula (II) either $R^1$ or $R^2$ is not a hydrogen atom.

**2.** An ink according to claim 1 wherein the solvent is an organic solvent, water, or a mixture of an organic solvent and water.

**3.** A transfer sheet for sublimation thermal transfer employing magenta anthraquinone which is suitable for sublimation thermal transfer and is of one of the formulae:

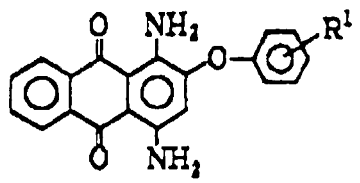

(I)

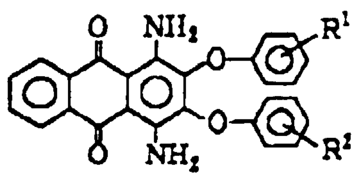

(II)

wherein $R^1$ is a hydrogen atom, a halogen atom, hydroxyl, alkyl having 1 to 4 carbon atoms or alkoxy having 1 to 4 carbon atoms and $R^2$ is a hydrogen atom, a halogen atom, alkyl having 1 to 4 carbon atoms or alkoxy having 1 to 4 carbon atoms, with the proviso that in formula (II) either $R^1$ or $R^2$ is not a hydrogen atom.

**4.** A transfer sheet for sublimation thermal transfer which is a transfer substrate to which ink according to claim 1 has been applied.

**5.** The ink or transfer sheet of any preceding claim comprising a compound of formula(II), wherein $R^1$ and $R^2$ each are p-methyl.

**6.** The ink or transfer sheet of any of claims 1 to 3 comprising a compound of formula(II), wherein $R^1$ and $R^2$ each are m-chloro.

7. The ink or transfer sheet of any of claims 1 to 3 comprising a compound of formula (II), wherein $R^1$ and $R^2$ each are m-methyl.

8. A method of thermal transfer comprising applying ink according to claim 1 or 2 to a substrate to form a transfer sheet, and then applying this sheet onto the face of the printable substrate onto which an image is to be recorded, and heating and pressing the resulting laminate from the back surface of the transfer sheet by means of a heat-transfer recording head.

**Patentansprüche**

1. Tinte für die Aufzeichnung durch thermische Übertragung, die einen sublimierbaren Farbstoff, ein Bindemittelharz und ein Lösungsmittel umfaßt, und worin der Farbstoff ein Magentaanthrachinon ist, das für die thermische Übertragung durch Sublimation geeignet ist und eine der folgenden Formeln umfaßt:

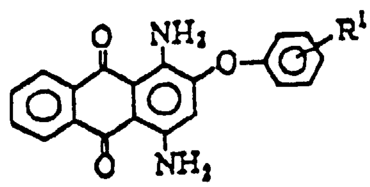

(I)

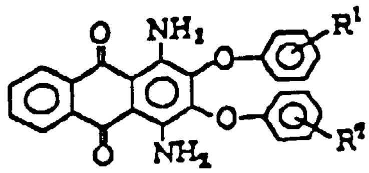

(II)

worin $R^1$ ein Wasserstoffatom, ein Halogenatom, eine Hydroxylgruppe, eine Alkylgruppe mit 1 bis 4 Kohlenstoffatomen oder eine Alkoxygruppe mit 1 bis 4 Kohlenstoffatomen ist, und $R^2$ ein Wasserstoffatom, ein Halogenatom, eine Alkylgruppe mit 1 bis 4 Kohlenstoffatomen oder eine Alkoxygruppe mit 1 bis 4 Kohlenstoffatomen ist, mit der Einschränkung, daß in Formel (II) entweder $R^1$ oder $R^2$ kein Wasserstoffatom ist.

2. Tinte nach Anspruch 1, worin das Lösungsmittel ein organisches Lösungsmittel, Wasser oder ein Gemisch aus einem organischen Lösungsmittel und Wasser ist.

3. Übertragungsschicht zur thermischen Übertragung durch Sublimation unter Verwendung eines Mangentaanthrachinons, welches für die thermische Übertragung durch Sublimation geeignet ist und eine der folgenden Formeln aufweist:

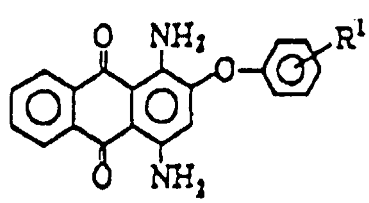

(I)

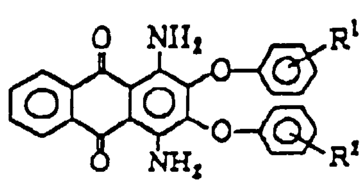

(II)

worin $R^1$ ein Wasserstoffatom, ein Halogenatom, eine Hydroxylgruppe, eine Alkylgruppe mit 1 bis 4 Kohlenstoffatomen oder eine Alkoxygruppe mit 1 bis 4 Kohlenstoffatomen ist, und $R^2$ ein Wasserstoffatom, ein Halogenatom, eine Alkylgruppe mit 1 bis 4 Kohlenstoffatomen oder eine Alkoxygruppe mit 1 bis 4 Kohlenstofatomen ist, mit der Einschränkung, daß in Formel (II) entweder $R^1$ oder $R^2$ kein Wasserstoffatom ist.

4. Übertragungsschicht zur thermischen Übertragung durch Sublimation, welches ein Übertragungssubstrat ist, auf das die Tinte nach Anspruch 1 aufgebracht wurde.

5. Tinte oder Übertragungsschicht nach einem der voranstehenden Ansprüche, welche eine Verbindung der Formel (II) umfassen, worin $R^1$ und $R^2$ jeweils eine Methylgruppe in p-Stellung ist.

6. Tinte oder Übertragungsschicht gemäß einem der Ansprüche 1 bis 3, die eine Verbindung der Formel (II) umfassen, worin $R^1$ und $R^2$ jeweils ein Chloratom in m-Stellung ist.

7. Tinte oder Übertragungsschicht nach einem der Ansprüche 1 bis 3, die eine Verbindung der Formel (II) umfassen, worin $R^1$ und $R^2$ jeweils eine Methylgruppe in m-Stellung ist.

8. Verfahren zur thermischen Übertragung, welches das Auftragen der Tinte nach Anspruch 1 oder 2 auf ein Substrat, um eine Übertragungsschicht herzustellen, das anschließendes Auf bringen dieser Schicht auf die Vorderseite eines bedruckbaren Substrats, auf welches eine Abbildung aufgezeichnet werden soll, und Erwärmen und Andrücken des erhaltenen Laminats von der Rückseite der Übertragungsschicht mittels eines Thermoschreibkopfes umfaßt.

**Revendications**

1. Encre pour l'enregistrement par transfert thermique comprenant une matière colorante sublimable, une résine servant de liant et un solvant, dans laquelle la matière colorante est une anthraquinone magenta appropriée au transfert thermique par sublimation et ayant l'une des formules:

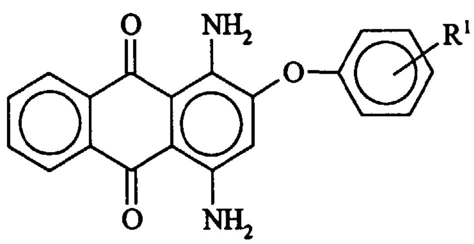

(I)

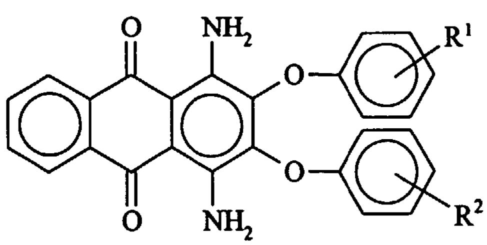

(II)

dans lesquelles $R_1$ est un atome d'hydrogène, un atome d'halogène ou un groupe hydroxyle, alkyle de 1 à 4 atomes de carbone ou alcoxy de 1 à 4 atomes de carbone, et $R^2$ est un atome d'hydrogène, un atome d'halogène ou un groupe alkyle de 1 à 4 atomes de carbone ou alcoxy de 1 à 4 atomes de carbone, à condition que, dans la formule (II), l'un ou l'autre des $R^1$ et $R^2$ ne soit pas un atome d'hydrogène.

2. Encre selon la revendication 1, dans laquelle le solvant est un solvant organique, de l'eau, ou un mélange d'un solvant organique et d'eau.

3. Feuille de transfert pour transfert thermique par sublimation utilisant une anthraquinone magenta appropriée au transfert thermique par sublimation et ayant l'une des formules

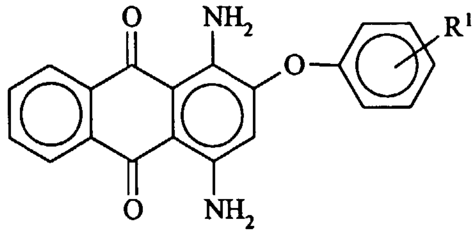

(I)

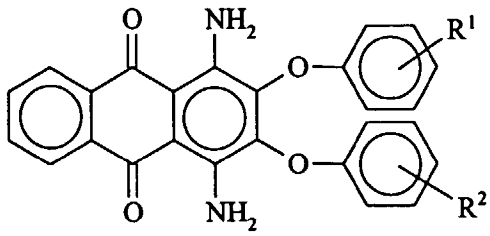

(II)

dans lesquelles $R_1$ est un atome d'hydrogène, un atome d'halogène ou un groupe hydroxyle, alkyle de 1 à 4 atomes de carbone ou alcoxy de 1 à 4 atomes de carbone, et $R^2$ est un atome d'hydrogène, un atome d'halogène ou un groupe alkyle de 1 à 4 atomes de carbone ou alcoxy de 1 à 4 atomes de carbone, à condition que, dans la formule (II), l'un ou l'autre des $R^1$ et $R^2$ ne soit pas un atome d'hydrogène.

**4.** Feuille de transfert pour transfert thermique par sublimation, qui est un substrat de transfert sur lequel on a appliqué une encre selon la revendication 1.

**5.** Encre ou feuille de transfert selon l'une quelconque des revendications précédentes, comprenant un composé de formule (II) dans laquelle $R^1$ et $R^2$ sont chacun un groupe p-méthyle.

**6.** Encre ou feuille de transfert selon l'une quelconque des revendications 1 à 3, comprenant un composé de formule (II) dans laquelle $R^1$ et $R^2$ sont chacun un reste m-chloro.

**7.** Encre ou feuille de transfert selon l'une quelconque des revendications 1 à 3, comprenant un composé de formule (II) dans laquelle $R^1$ et $R^2$ sont chacun un groupe m-méthyle.

**8.** Procédé de transfert thermique comprenant l'application d'une encre selon la revendication 1 ou 2 sur un substrat pour former une feuille de transfert, puis l'application de cette feuille sur la face du substrat imprimable sur laquelle doit être enregistrée une image, et le chauffage et le pressage du stratifié obtenu sur l'envers de la feuille de transfert au moyen d'une tête d'enregistrement de transfert thermique.